# EUROPEAN PATENT SPECIFICATION

(11) **EP 3 403 709 B1**
(45) Date of publication and mention of the grant of the patent: **11.03.2020**
(21) Application number: 17171940.4
(22) Date of filing: 19.05.2017
(51) Int. Cl.: B01D 46/00, B01D 46/42, B01D 46/44, B01D 46/46, B01D 46/02

(54) **LOW PARTICULATE MATTER EMISSION FABRIC FILTER**
GEWEBEFILTER MIT NIEDRIGEN PARTIKELEMISSIONEN
FILTRE EN TISSU À FAIBLE ÉMISSION DE MATIÈRE PARTICULAIRE

(43) Date of publication of application: 21.11.2018
(73) Proprietor: General Electric Technology GmbH, 5400 Baden (CH)
(72) Inventor: NILSSON, Peter Lars, 35112 Växjö (SE)
(74) Representative: BRP Renaud & Partner mbB Rechtsanwälte Patentanwälte Steuerberater

(56) References cited:
- WO-A1-98/05407
- WO-A2-2007/079220
- KR-A- 20080 025 234
- KR-A- 20150 037 186
- US-A- 3 097 936
- US-A- 4 507 130
- US-A- 4 719 791
- US-A1- 2002 187 083

## Description

### FIELD OF THE DISCLOSURE

In general, the present disclosure relates to a fabric filter system useful for filtering a polluted gas to achieve a filtered gas with a relatively low particulate matter content. More specifically, the present disclosure relates to a fabric filter system useful for filtering a polluted gas to achieve a filtered gas with a relatively low particulate matter content, including during the period of time from filter bag cleaning up until dust cake formation on the surface of the filter bag.

### BACKGROUND OF THE DISCLOSURE

Commercial "bag house" type filter installations typically consist of a plurality of parallel filter units. Such filter installations are for example mentioned in KR20150037186A. Each such filter unit contains a plurality of parallel rows of vertically arranged filter elements in the form of filter bags. Each such filter bag has a top end opening. A gas polluted with particulate matter is channeled through the filter bags to filter and collect particulate matter entrained in the gas. Hence, upon filtration and collection of the particulate matter entrained in the gas, a "cleaned gas" is produced. More specifically, this cleaned gas is produced by channeling a polluted gas into a filter installation for passage through one or more filter units comprising a plurality of filter bags for polluted gas flow from an exterior surface of a filter bag through to an interior area within the filter bag via a flow path through sides of the filter bag. As the polluted gas passes from the exterior surface of the filter bag through to the interior area within the filter bag, particulate matter pollutants entrained in the gas are filtered and collected forming dust cakes on the exterior surfaces of the plurality of filter bags. Hence, gas in the interior area of the filter bag is the so produced cleaned gas. Cleaned gas exits the interior area of the filter bag via the top end opening in each of the plurality of filter bags. Cleaned gas flows from the top end openings through an outlet duct common to the filter units. During operation of the filter installation, a negative pressure is typically generated by a fan arranged downstream of the filter installation to cause gas flow through the filter units and filter bags.

As noted above, dust, particulates, and like particulate matter pollutants entrained in the polluted gas are filtered by and collected on the exterior surfaces of the filter bags, thus forming dust cakes on the exterior surfaces. Cleaning of the filter bags to remove the dust cakes is necessary for effective and efficient equipment performance. Cleaning of the filter bags is accomplished using a pressure medium typically in the form of compressed air pulses injected into the filter bags in a direction opposite to that of gas filtering. Rows of filter bags are cleaned successively using cleaning units arranged for each such given row. A cleaning unit cleans a row of filter bags by generating a compressed air pulse delivered substantially simultaneously to each filter bag in the given row. More specifically, each cleaning unit comprises a nozzle pipe arranged above and extending the length of the associated row of filter bags for cleaning. Each nozzle pipe typically has a plurality of vertically downwardly projecting pipe sockets connected thereto. Each pipe socket is positioned straight above a filter bag top end opening within the associated row. The function of these pipe sockets is to direct via nozzles compressed air pulses into the respective filter bag top end openings. The pipe sockets usually have a diameter of about 1.5 to 2 times greater than the diameter of the nozzle associated therewith. The nozzles associated therewith typically consist of circular holes of varying diameter formed in the nozzle pipe. The varying diameter of the circular holes along the nozzle pipe is determined empirically based on the total number of pipe sockets/nozzles, requiring a uniform distribution of compressed air pulsed through the pipe sockets/nozzles. As such, circular holes arranged in the nozzle pipe are smaller or larger in diameter depending on the circular holes' distance from the nozzle pipe inlet. By so varying the diameter of the circular holes, a uniform distribution of compressed air pulsed through the pipe sockets/nozzles is achieved.

In the cleaning of filter bags using a pulse of compressed air, a valve is temporarily opened to establish fluid flow between a compressed air tank or pressure vessel and the nozzle pipe. Upon fluid flow between the compressed air tank or pressure vessel and the nozzle, compressed air is pulsed through the nozzle pipe and its associated pipe sockets and nozzles. As such, a compressed air pulse is supplied to each of the filter bags in the associated row of filter bags. Compressed air pulses supplied to the filter bags dislodge particulate matter that collects and cakes in and on the walls of the filter bags. Dust cakes formed on the filter bags are thereby loosened by the flow of compressed air from the interior areas of the filter bags, through the filter bag side walls, to an area in the filter unit exterior thereto. The resultant loosened dust cakes fall off the exterior of the filter bags for hopper collection.

Following such cleaning of the filter bags, filter bags with no exterior surface dust cakes are relatively less effective in trapping or collecting particulate matter than are identical filter bags with exterior surface dust cakes. Relatively less effective filtering or collecting of particulate matter by filter bags without exterior surface dust cakes means relatively higher clean gas particulate matter emissions, which is undesirable. Hence, dust cakes on the exterior surfaces of filter bags is beneficial for particulate matter collection, up until a point where the increasing thicknesses of the dust cakes hinder adequate gas flow through the filter bags causing a pressure drop within the filter installation. A solution to the problem of relatively higher particulate matter emissions during the period from filter bag cleaning up until dust cake formation on the surfaces of the filter bags, is needed.

### SUMMARY OF THE DISCLOSURE

In view of the above, disclosed herein is a relatively low particulate matter emission fabric filter system according to claim 1. Also, disclosed herein is a method according to claim 9, of using the subject relatively low particulate matter emission fabric filter system for effective particulate matter collection, including during the period of time from filter bag cleaning up until dust cake formation on the surfaces of the filter bags. For purposes of this disclosure, "dust cake formation" is defined herein as a complete, non-sporadic, coating of a surface of a filter bag with particulate matter. As such, the subject fabric filter system comprises a gas flow damper system arranged at an inlet of each fabric filter chamber and/or at an outlet of each fabric filter chamber to control gas flow velocity through each fabric filter chamber during the period from filter bag cleaning up until dust cake formation on the surfaces of the filter bags. Filter bags without exterior surface dust cake formation filtering at a relatively lower gas velocity have unexpectedly been found to be as effective in trapping or collecting particulate matter as identical filter bags with exterior surface dust cake formation filtering at a relatively higher gas velocity. Hence, with the subject fabric filter system with gas flow damper system, effective relatively low particulate matter emission is achieved both when the fabric filter bags have exterior surface dust cake formation, as well as during the period of time from filter bag cleaning up until dust cake formation on the surfaces of the filter bags. Achieving relatively low particulate matter emission both when the fabric filter bags have exterior surface dust cake formation, as well as during the period of time from filter bag cleaning up until dust cake formation on the surfaces of the filter bags is a significant improvement over filter installations having relatively higher particulate matter emission, particularly during the period of time from filter bag cleaning up until dust cake formation on the surfaces of the filter bags.

The subject fabric filter system includes a gas flow damper system arranged at an inlet of each fabric filter chamber and/or at an outlet of each fabric filter chamber to control gas flow velocity through each fabric filter chamber. Typically, a fabric filter system may include two to twenty or more fabric filter chambers. Each fabric filter chamber may be equipped with ten to a hundred or more hanging fabric filter bags. Fabric filter systems comprise multiple fabric filter chambers so that as one or more fabric filter chamber(s) undergo bag cleaning, maintenance, low demand turn down, and/or the like, the remaining fabric filter chamber(s) may continue operation. In the fabric filter system equipped with a gas flow damper system, a movable damper panel arranged at an inlet of each fabric filter chamber and/or at an outlet of each fabric filter chamber is adjustable to control gas velocity through the fabric filter chamber, particularly during a period of time from filter bag cleaning up until dust cake formation on surfaces of the filter bags within the fabric filter chamber. The movable damper panel may be adjusted manually or mechanically. If adjusted mechanically, adjustment of the damper panel may be automated and affected by an electronic signal generated by a control device. In such case, the control device determines the timing for removal of collected particulate matter or the dust cake formed on the exterior surface of the fabric filter bag. The control device determines the timing for such removal based on, for example, a certain length of time having elapsed since the last removal as measured by a timer, a certain pressure drop in flue gas flow through the fabric filter chamber as measured by one or more pressure sensors arranged within the fabric filter chamber upstream and/or downstream of the fabric filter bags, and/or a certain drop in temperature as measured by one or more temperature sensors arranged within the fabric filter chamber upstream and/or downstream of the fabric filter bags, as compared to predetermined values therefor. Predetermined values for length of time, pressure drop and/or temperature drop is programmed into or received into the control device, such as for example, via an interface. Upon passage of a length of time corresponding to the time predetermined value, the control device electronically signals cleaning of one or more fabric filter chambers. Following cleaning of the one or more fabric filter chambers, and prior to operation of the one or more cleaned fabric filter chambers, the control device electronically affects adjustment of the one or more cleaned fabric filter chambers' damper panels to affect a gas velocity to achieve a gas velocity of about 5 m/h to about 50 m/h, or about 10 m/h to about 40 m/h, through the one or more cleaned fabric filter chambers effective for low particulate matter emission filtering of the polluted gas therein. Alternatively, or in addition, upon measuring a pressure drop deviating from the pressure predetermined value, the control device electronically signals cleaning of one or more fabric filter chambers. Following cleaning of the one or more fabric filter chambers, and prior to operation of the one or more cleaned fabric filter chambers, the control device electronically affects adjustment of the one or more cleaned fabric filter chambers' damper panels to affect a gas velocity to achieve a gas velocity of about 5 m/h to about 50 m/h, or about 10 m/h to about 40 m/h, through the one or more cleaned fabric filter chambers effective for low particulate matter emission filtering of the polluted gas therein. Alternatively, or in addition, upon measuring a temperature drop deviating from the temperature predetermined value, the control device electronically signals cleaning of one or more fabric filter chambers. Following cleaning of the one or more fabric filter chambers, and prior to operation of the one or more cleaned fabric filter chambers, the control device electronically affects adjustment of the one or more cleaned fabric filter chambers' damper panels to affect a gas velocity to achieve a gas velocity of about 5 m/h to about 50 m/h, or about 10 m/h to about 40 m/h, through the one or more cleaned fabric filter chambers effective for low particulate matter emission filtering of the polluted gas therein. The control device electronically signals cleaning of the one or more fabric filter chambers by electronically affecting operation of a pulse valve resulting in a short pulse of pressurized gas flowing through a nozzle pipe, through fluidly connected nozzles, and into the individual fabric filter bags within the fabric filter chamber. As an effect of such a pulse of pressurized gas, the fabric filter bags expand rapidly, causing most, if not all, of the collected particulate matter or dust cake on the exterior surface of the fabric filter bag to release therefrom. After such cleaning, damper panel(s) may be adjusted manually or mechanically. If adjusted mechanically, adjustment of the damper panel may be automated and affected by an electronic signal generated by a control device. An automated damper panel may be adjusted between two distinct positions, i.e., a relatively low gas velocity position to achieve a gas velocity of about 5 m/h to about 50 m/h, or about 10 m/h to about 40 m/h, used without fabric filter bag dust cake formation and a relatively high gas velocity position to achieve a gas velocity of about 40 m/h to about 120 m/h, or about 50 m/h to about 130 m/h, used with fabric filter bag dust cake formation. Alternatively, an automated damper panel may be continuously or intermittently adjusted to any position ranging from a relatively low gas velocity position used without fabric filter bag dust cake formation to a relatively high gas velocity position used with fabric filter bag dust cake formation, as the fabric filter bag dust cake formation thickens. Such thickening of the fabric filter bag dust cake formation may be measured, such as for example, by time, by a pressure drop and/or by a temperature drop. Based on such fabric filter bag dust cake measurements, the automated damper panel is continuously or intermittently adjusted to any position ranging from a relatively low gas velocity position used without fabric filter bag dust cake formation to a relatively high gas velocity position used with fabric filter bag dust cake formation.

The subject method of using a relatively low particulate matter emission fabric filter system comprises equipping a fabric filter system with a gas flow damper system arranged at an inlet of each fabric filter chamber and/or at an outlet of each fabric filter chamber to control gas flow velocity through each fabric filter chamber. According to the subject method, a fabric filter system may include two to twenty or more fabric filter chambers. Each fabric filter chamber may be equipped with ten to a hundred or more hanging fabric filter bags. Fabric filter systems comprise multiple fabric filter chambers so that as one or more fabric filter chamber(s) undergo bag cleaning, maintenance, low demand turn down, and/or the like, the remaining fabric filter chamber(s) may continue operation. The method comprises equipping the fabric filter system with a gas flow damper system comprising a movable damper panel arranged at an inlet of each fabric filter chamber and/or at an outlet of each fabric filter chamber, adjustable to control gas velocity through the fabric filter chamber, particularly during a period of time from filter bag cleaning up until dust cake formation on surfaces of the filter bags within the fabric filter chamber. The movable damper panel may be adjusted manually or mechanically. If adjusted mechanically, adjustment of the damper panel may be automated and affected by an electronic signal generated by a control device. In such case, the control device determines the timing for removal of collected particulate matter or the dust cake formation on the exterior surface of the fabric filter bag. The control device determines the timing for such removal based on, for example, a certain length of time having elapsed since the last removal as measured by a timer, a certain pressure drop in flue gas flow through the fabric filter chamber as measured by one or more pressure sensors arranged within the fabric filter chamber upstream and/or downstream of the fabric filter bags, and/or a certain drop in temperature as measured by one or more temperature sensors arranged within the fabric filter chamber upstream and/or downstream of the fabric filter bags, as compared to predetermined values therefor. Predetermined values for length of time, pressure drop and/or temperature drop are programmed into or received into the control device, such as for example, via an interface. Upon passage of a length of time corresponding to the time predetermined value, the control device electronically signals cleaning of one or more fabric filter chambers. Following cleaning of the one or more fabric filter chambers, and prior to operating the one or more cleaned fabric filter chambers, the control device electronically affects adjustment of the one or more cleaned fabric filter chambers' damper panels to affect a gas velocity, to achieve a gas velocity of about 5 m/h to about 50 m/h, or about 10 m/h to about 40 m/h through the one or more cleaned fabric filter chambers effective for low particulate matter emission filtering of the polluted gas therein. Alternatively, or in addition, upon measuring a pressure drop deviating from the pressure predetermined value, the control device electronically signals cleaning of one or more fabric filter chambers. Following cleaning of the one or more fabric filter chambers, and prior to operating the one or more cleaned fabric filter chambers, the control device electronically affects adjustment of the one or more cleaned fabric filter chambers' damper panels to affect a gas velocity, to achieve a gas velocity of about 5 m/h to about 50 m/h, or about 10 m/h to about 40 m/h through the one or more cleaned fabric filter chambers effective for low particulate matter emission filtering of the polluted gas therein. Alternatively, or in addition, upon measuring a temperature drop deviating from the temperature predetermined value, the control device electronically signals cleaning of one or more fabric filter chambers. Following cleaning of the one or more fabric filter chambers, and prior to operating the one or more cleaned fabric filter chambers, the control device electronically affects adjustment of the one or more cleaned fabric filter chambers' damper panels to affect a gas velocity, to achieve a gas velocity of about 5 m/h to about 50 m/h, or about 10 m/h to about 40 m/h through the one or more cleaned fabric filter chambers effective for low particulate matter emission filtering of the polluted gas therein. The control device electronically signals cleaning of the one or more fabric filter chambers by electronically affecting operation of a pulse valve resulting in a short pulse of pressurized gas flowing through a nozzle pipe, through fluidly connected nozzles, and into the individual fabric filter bags within the fabric filter chamber. As an effect of such a pulse of pressurized gas, the fabric filter bags expand rapidly, causing most, if not all, of the collected particulate matter or dust cake formation on the exterior surface of the fabric filter bag to release therefrom. After such cleaning, damper panel(s) may be adjusted manually or mechanically. If adjusted mechanically, adjustment of the damper panel may be automated and affected by an electronic signal generated by the control device. An automated damper panel may be adjusted between two distinct positions, i.e., a relatively low gas velocity position to achieve a gas velocity of about 5 m/h to about 50 m/h, or about 10 m/h to about 40 m/h, used without fabric filter bag dust cake formation and a relatively high gas velocity position to achieve a gas velocity of about 40 m/h to about 120 m/h, or about 50 m/h to about 130 m/h, used with fabric filter bag dust cake formation. Alternatively, an automated damper panel may be continuously or intermittently adjusted to any position ranging from a relatively low gas velocity position used without fabric filter bag dust cake formation to a relatively high gas velocity position used with fabric filter bag dust cake formation, as the fabric filter bag dust cake formation thickens. Such thickening of the fabric filter bag dust cake formation may be measured, such as for example, by time, by a pressure drop and/or by a temperature drop. Based on such fabric filter bag dust cake formation measurements, the automated damper panel is continuously or intermittently adjusted to any position ranging from a relatively low gas velocity position used without fabric filter bag dust cake formation to a relatively high gas velocity position used with fabric filter bag dust cake formation.

In summary, a plant is provided comprising a fabric filter system comprising one or more fabric filter chambers with each fabric filter chamber comprising a plurality of fabric filter bags, an inlet equipped with one or more movable damper panels or an outlet equipped with one or more movable damper panels, and a control device operative to affect positioning of the one or more damper panels based at least in part on one or more fabric filter bag dust cake formation measurements. As such, the one or more fabric filter bag dust cake formation measurements are measured by a timer, one or more pressure sensors or one or more temperature sensors. The one or more fabric filter bag dust cake formation measurements are so measured by one or more sensors arranged within the one or more fabric filter chambers upstream and/or downstream of the plurality of fabric filter bags. The control device of the fabric filter system affects positioning of the one or more damper panels for control of polluted gas velocity flowing through the one or more fabric filter chambers from the inlet to the outlet. As such, the one or more damper panels are positioned in a relatively closed position to achieve a polluted gas velocity of about 5 m/h to about 50 m/h, or about 10 m/h to about 40 m/h, flowing through the one or more fabric filter chambers for a period of time from cleaning of the plurality of fabric filter bags until dust cake formation on exterior surfaces of the plurality of fabric filter bags. Further, the one or more damper panels are positioned in a relatively open position to achieve a polluted gas velocity of about 40 m/h to about 120 m/h, or about 50 m/h to about 130 m/h, flowing through the one or more fabric filter chambers for a period of time from dust cake formation on exterior surfaces of the plurality of fabric filter bags until cleaning of the plurality of fabric filter bags. The one or more damper panels are positioned in a closed position for a polluted gas velocity of about zero flowing through the one or more fabric filter chambers during cleaning of the plurality of fabric filter bags.

In summary, a method is provided for using a plant fabric filter system for cleaning a polluted gas to achieve relatively low particulate matter emissions in a produced cleaned gas. The method comprises equipping a fabric filter system comprising one or more fabric filter chambers, with each fabric filter chamber comprising a plurality of fabric filter bags, an inlet, and an outlet, with one or more movable damper panels, and controlling using a control device positioning of the one or more damper panels based at least in part on one or more fabric filter bag dust cake formation measurements. According to such method, the one or more fabric filter bag dust cake formation measurements are measured by a timer, one or more pressure sensors or one or more temperature sensors. The one or more fabric filter bag dust cake formation measurements are measured by one or more sensors arranged within the one or more fabric filter chambers upstream and/or downstream of the plurality of fabric filter bags. The control device of the fabric filter system affects positioning of the one or more damper panels for control of polluted gas velocity flowing through the one or more fabric filter chambers from the inlet to the outlet. As such, the one or more damper panels are positioned in a relatively closed position to achieve a polluted gas velocity of about 5 m/h to about 50 m/h, or about 10 m/h to about 40 m/h, flowing through the one or more fabric filter chambers for a period of time from cleaning of the plurality of fabric filter bags until dust cake formation on exterior surfaces of the plurality of fabric filter bags, and positioned in a closed position to achieve a polluted gas velocity of about zero flowing through the one or more fabric filter chambers during cleaning of the plurality of fabric filter bags. Further, the one or more damper panels are positioned in a relatively open position to achieve a polluted gas velocity of about 40 m/h to about 120 m/h, or about 50 m/h to about 130 m/h, flowing through the one or more fabric filter chambers for a period of time from dust cake formation on exterior surfaces of the plurality of fabric filter bags until cleaning of the plurality of fabric filter bags.

### BRIEF DESCRIPTION OF THE DRAWINGS

The present disclosure will now be described in more detail with reference to the accompanying drawing.

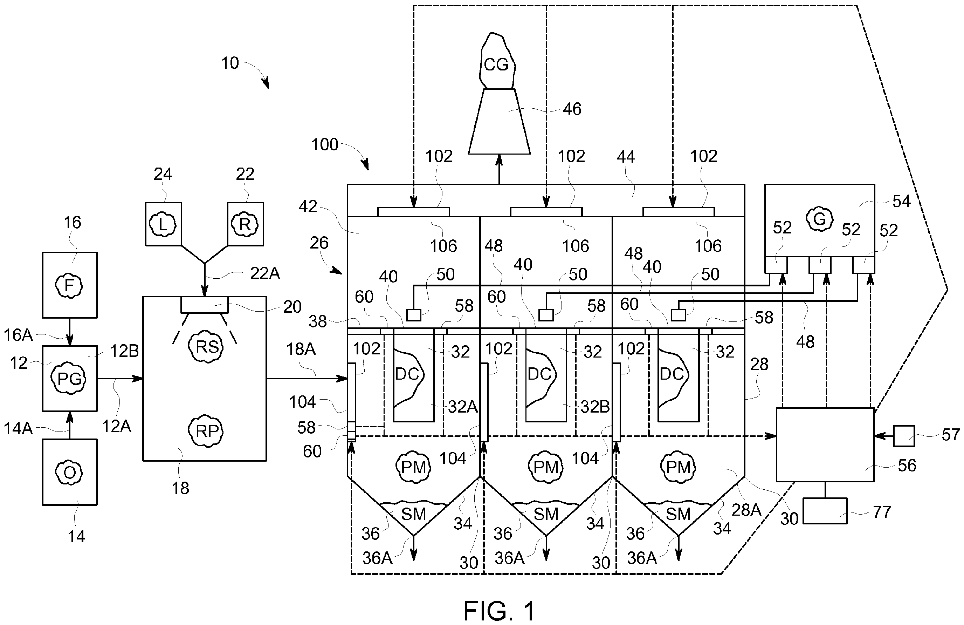

FIGURE 1 is a schematic side cross sectional side view of a plant with particulate collection equipment according to the present disclosure.

### DETAILED DESCRIPTION

Referring to Figure 1, disclosed herein is a plant 10 such as a power plant or an industrial plant that when in operation generates a polluted gas PG. An example of such a plant 10 for purposes of illustration not limitation, is a power plant that includes a combustion unit 12, such as a steam producing boiler unit, that when in operation generates the polluted gas PG. The combustion unit 12 may be supplied at least one oxygen containing gas O, e.g., air, O₂ gas, or gases that include O₂ gas, from a gas supply 14 via a fluidly connected supply pipe 14A. Likewise, the combustion unit 12 is supplied a carbonaceous fuel F from a fuel supply 16 via a fluidly connected fuel duct 16A for combustion of the fuel F in the presence of the supplied at least one oxygen containing gas O within the combustion unit 12. The fuel F supplied to combustion unit 12 is preferably a fossil fuel such as for example coal, oil, or natural gas. In addition to steam, polluted gas PG is produced upon fuel F combustion within the combustion unit 12. Steam produced by fuel F combustion can be transported to a turbine (not shown) for use in generating electricity, or put to other uses such as for example district heating, combustion unit 12 pre-heating, or the like. Polluted gas PG produced by fuel F combustion comprises acid gases, such as for example but not limited to sulfur oxides (SOₓ) and hydrogen chloride (HCI), ash, heavy metals, dust and like particles. Polluted gas PG produced in the combustion unit 12 flows out of an interior area 12B of the combustion unit 12 through a fluidly connected conduit 12A into a dry flue gas desulfurization DFGD system 18. DFGD system 18, for example, may be a vertical reactor DFGD system equipped with a distribution device (not shown) as described in detail in U.S. Patent No. 5,887,973. Alternatively, DFGD system 18 may be a spray dryer absorber DFGD system. For purposes of clarity, DFGD system 18 will be described herein as simply a spray dryer absorber DFGD system, although other types of DFGD systems may be used to achieve flue gas desulfurization. DFGD system 18 comprises a plurality of atomizers 20, which may be for example two to ten atomizers 20, but more preferably four to five atomizers 20. An example of an atomizer 20 suitable for the subject DFGD system 20 is a rotary model atomizer commercially available from GE-Power, located in Erlanger, Kentucky, USA. Alternatively, other commercially available atomizers 20 of a similar type, such as two-media nozzle atomizers or lances with multiple two-media nozzles, may likewise be utilized in the subject DFGD system 18. Each atomizer 20 is arranged and fluidly connected to receive a reagent slurry RS produced from reagent R such as limestone and/or lime supplied from a reagent supply 22 and liquid L such as water supplied from a liquid supply 24 via ducts 22A. The atomizers 20 disperse the reagent slurry RS within the DFGD system 18 for intermixing contact with polluted gas PG flowing therethrough. Upon contact with the polluted gas PG, the reagent slurry RS reacts with the impurities in the polluted gas PG thereby producing a dry powder reaction product RP and polluted gas PG of a reduced impurity content. The dry powder reaction product RP produced in the polluted gas PG upon contact of the polluted gas PG with the reagent slurry RS is largely entrained in the polluted gas PG. The polluted gas PG with the entrained dry powder reaction product RP flows from DFGD system 18 via duct 18A into fluidly connected fabric filter system 26.

Fabric filter system 26 comprises a housing 28 with at least two fabric filter chambers 30. The at least two fabric filter chambers 30 may be for example two to twenty fabric filter chambers 30, but more preferably six to ten fabric filter chambers 30. Schematically illustrated in Figure 1, fabric filter system 26 comprises three fabric filter chambers 30. Fabric filter chambers 30 are dimensioned to accommodate a plurality of hanging fabric filter bags 32 about 6 meters (about 19 feet) to about 12 meters (about 40 feet), but most typically about 10 meters (about 33 feet), in length. However, for purposes of clarity, in Figure 1, only a single fabric filter bag 32 is illustrated in each fabric filter chamber 30. Polluted gas PG with entrained dry powder reaction product RP and other particles, such as ash and dust, referred to hereinafter both individually and collectively as "particulate matter" PM, flows out of the DFGD system 18 via duct 18A. As such, the polluted gas PG with entrained particulate matter PM flows out from the DFGD system 18 via duct 18A into fluidly connected fabric filter system 26. At bottom 34 of housing 28, below each fabric filter chamber 30 is a hopper 36 equipped with an outlet 36A. Within interior area 28A of housing 28 is a horizontal plate 38 with a plurality of openings 40 therethrough. Hanging fabric filter bags 32 are removably attached in openings 40 in horizontal plate 38. Typically, a fabric filter chamber 30 may comprise 2 to 20,000 such openings 40 each equipped with a fabric filter bag 32. In operation, polluted gas PG with entrained particulate matter PM flows to fabric 32A of the fabric filter bags 32. The entrained particulate matter PM for the most part does not pass through fabric 32A of the fabric filter bags 32, but rather collects or cakes on an exterior surface 32B of the fabric 32A. The polluted gas PG passes through fabric 32A of the fabric filter bags 32 thereby producing a cleaned flue gas CG, before passing through openings 40 in horizontal plate 38 into the "clean" upper portion 42 of interior area 28A of housing 28 above horizontal plate 38. The cleaned flue gas CG flows from upper portion 42 through duct 44 to a fluidly connected stack 46 for release to the environment.

The particulate matter PM collects or cakes on the exterior surface 32B of the fabric filter bags 32 is referred to herein as dust cake formation DC. For purposes of this disclosure, "dust cake formation DC" is defined herein as a complete, non-sporadic, coating of an exterior surface 32B of a fabric filter bag 32 with particulate matter PM. For proper fabric filter system 26 operation, such dust cake formation DC must occasionally be removed. The fabric filter system 26 is equipped to remove collected or caked particulate matter PM, or dust cake formation DC, from the exterior surface 32B of the fabric filter bags 32. To remove the collected or caked particulate matter PM, or dust cake formation DC, nozzle pipes 48 are arranged in the upper portion 42 of housing 28. Each nozzle pipe 48 is provided with a pulsing nozzle 50 aligned with an opening 40 equipped with a removably attached fabric filter bag 32. Each nozzle pipe 48 is fluidly connected to a pulse valve 52 fluidly connected to a compressed gas tank or pressure vessel 54. The compressed gas tank or pressure vessel 54 typically has an absolute pressure of about 10 psi to about 145 psi, or about 60 psi, to be suitable for cleaning the exterior surface 32B of fabric filter bags 32 with periodic blasts of a pressurized gas G, such as air, carbon dioxide, or other relatively low cost gas. These periodic blasts of pressurized gas G may be manually controlled, or electronically controlled through a control device 56, in order to remove the collected or caked particulate matter PM, or dust cake formation DC, from the exterior surface 32B of the fabric filter bags 32. For purposes of electronically controlling the cleaning of fabric filter bags 32, a fabric filter system 26 predetermined operational parameter, such as a predetermined time value, pressure value, and/or temperature value is received in the control device 56, for example, via an interface 77. Accordingly, control device 56 may affect periodic removal of collected or caked particulate matter PM, or dust cake formation DC, from the exterior surface 32B of the fabric filter bags 32 based at least in part on a time interval measurement as measured by a timer 57 as compared to the predetermined time value, a pressure of flue gas FG flow measurement as measured by one or more pressure sensors 58 arranged at openings 40, at inlet 104, and/or elsewhere within fabric filter chambers 30 as compared to the predetermined pressure value, and/or a temperature measurement as measured by one or more temperature sensors 60 at openings 40, at inlet 104, and/or elsewhere within fabric filter chambers 30 as compared to the predetermined temperature value. For example, if the time interval measurement transmitted by timer 57 and received by the control device 56 is less than the predetermined time value, software executing on the control device 56 generates no electronic signal. If the time interval measurement received by the control device 56 is the same or greater than the predetermined time value, software executing on the control device 56 generates an electronic signal affecting pulse valve 52 to "open" for a short period of time, typically 150 to 500 ms, thereby cleaning the fabric filter bags 32 of collected/caked particulate matter PM/dust cake formation DC. As an option, timer 57 may be either arranged within the control device 56, or arranged outside of the control device 56 as illustrated, in which case the time interval measurement is electronically transmitted by the timer 57 and received by the control device 56. As another example, if the pressure measurement transmitted by the one or more pressure sensors 58 and received by the control device 56 is greater than the predetermined pressure value, software executing on the control device 56 generates no electronic signal. If the pressure measurement received by the control device 56 is the same or less than the predetermined pressure value indicating an undesirable pressure drop, software executing on the control device 56 generates an electronic signal affecting pulse valve 52 to "open" for a short period of time, typically 150 to 500 ms, thereby cleaning the fabric filter bags 32 of collected/caked particulate matter PM/dust cake formation DC. Similarly, if the temperature measurement transmitted by the one or more temperature sensors 60 and received by the control device 56 is greater than the predetermined temperature value, software executing on the control device 56 generates no electronic signal. If the temperature measurement received by the control device 56 is the same or less than the predetermined temperature value indicating an undesirable decrease in flue gas FG flow, software executing on the control device 56 generates an electronic signal affecting pulse valve 52 to "open" for a short period of time, typically 150 to 500 ms, thereby cleaning the fabric filter bags 32 of collected/caked particulate matter PM/dust cake formation DC.

The herein described opening of the pulse valve 52 for a short period of time results in a short pulse of pressurized gas G flowing through nozzle pipe 48, through fluidly connected pulsing nozzles 50, through openings 40, and into fabric filter bags 32. As an effect of such pulse of pressurized gas G, the fabric filter bags 32 expand rapidly, causing most, if not all, of the collected or caked particulate matter PM/dust cake formation DC on the exterior surface 32B of the fabric filter bags 32 to be released. The released particulate matter PM/dust cake formation DC falls downwardly into hoppers 36 of the fabric filter chambers 30 as separated matter SM. Occasionally the separated matter SM collected in hoppers 36 is removed through outlet 36A and discarded in an environmentally conservative manner or removed through outlet 36A for use elsewhere within plant 10.

The subject fabric filter system 26 comprises a gas flow damper system 100 with one or more movable damper panels 102 arranged at inlets 104 of each fabric filter chamber 30 and/or at outlets 106 of each fabric filter chamber 30 to control flue gas FG flow velocity through each fabric filter chamber 30. Fabric filter system 26 comprises multiple fabric filter chambers 30 so that as one or more fabric filter chamber(s) 30 undergo fabric filter bag 32 cleaning, maintenance, low demand turn down, and/or the like, the remaining fabric filter chamber(s) 30 may continue operation. The subject fabric filter system 26 is equipped with a gas flow damper system 100 comprising one or more movable damper panels 102 arranged at inlets 104 of each fabric filter chamber 30 and/or at outlets 106 of each fabric filter chamber 30. The one or more movable damper panels 102 are adjustable to control gas velocity through each fabric filter chamber 30, particularly during a period of time from fabric filter bag 32 cleaning up until dust cake formation DC on exterior surfaces 32B of the fabric filter bags 32 within the fabric filter chambers 30. The one or more movable damper panels 102 may be adjusted manually or mechanically. The one or more movable damper panels 102 may be moved or repositioned by sliding, folding, swinging, or other such action. If adjusted, moved or repositioned mechanically, adjustment of the one or more movable damper panels 102 may be automated and affected by an electronic signal generated by a control device 56. In such case, the control device 56 determines the timing for removal of collected particulate matter PM/dust cake formation DC on the exterior surfaces 32B of the fabric filter bags 32. The control device 56 determines the timing for such removal based on, for example, a certain length of time having elapsed since the last removal of particulate matter PM/dust cake formation DC as measured by a timer 57, a certain pressure drop in polluted gas PG flow through the fabric filter chamber 30 as measured by one or more pressure sensors 58 arranged within the fabric filter chamber 30 upstream and/or downstream of the fabric filter bags 32, and/or a certain drop in temperature as measured by one or more temperature sensors 60 arranged within the fabric filter chamber 30 upstream and/or downstream of the fabric filter bags 32, as compared to predetermined values therefor. Predetermined values for length of time, pressure drop and/or temperature drop are programmed into or received into the control device 56, such as for example, via an interface 77. Upon passage of a length of time corresponding to the time predetermined value, the control device 56 electronically signals cleaning of one or more fabric filter chambers 30. Following cleaning of the one or more fabric filter chambers 30, and prior to operation of the one or more cleaned fabric filter chambers 30, the control device 56 electronically affects adjustment of the one or more cleaned fabric filter chambers' 30 one or more damper panels 102 to affect a gas velocity, to achieve a gas velocity of about 5 m/h to about 50 m/h, or about 10 m/h to about 40 m/h, through the one or more cleaned fabric filter chambers 30 effective for low particulate matter PM emission filtering of the polluted gas PG therein. Alternatively, or in addition, upon measuring a pressure drop deviating from the pressure predetermined value, the control device 56 electronically signals cleaning of one or more fabric filter chambers 30. Following cleaning of the one or more fabric filter chambers 30, and prior to operation of the one or more cleaned fabric filter chambers 30, the control device 56 electronically affects adjustment of the one or more cleaned fabric filter chambers' 30 one or more damper panels 102 to affect a gas velocity, to achieve a gas velocity of about 5 m/h to about 50 m/h, or about 10 m/h to about 40 m/h, through the one or more cleaned fabric filter chambers 30 effective for low particulate matter PM emission filtering of the polluted gas PG therein. Alternatively, or in addition, upon measuring a temperature drop deviating from the temperature predetermined value, the control device 56 electronically signals cleaning of one or more fabric filter chambers 30. Following cleaning of the one or more fabric filter chambers 30, and prior to operation of the one or more cleaned fabric filter chambers 30, the control device 56 electronically affects adjustment of the one or more cleaned fabric filter chambers' 30 one or more damper panels 102 to affect a gas velocity, to achieve a gas velocity of about 5 m/h to about 50 m/h, or about 10 m/h to about 40 m/h, through the one or more cleaned fabric filter chambers 30 effective for low particulate matter PM emission filtering of the polluted gas PG therein. The control device 56 electronically signals cleaning of the one or more fabric filter chambers 30 by electronically affecting operation of a pulse valve 52 resulting in a short pulse of pressurized gas G flowing through a nozzle pipe 48, through fluidly connected pulsing nozzles 50, and into the individual fabric filter bags 32 within the fabric filter chamber 30. As an effect of such a pulse of pressurized gas G, the fabric filter bags 32 expand rapidly, causing most, if not all, of the collected particulate matter PM or dust cake formation DC on the exterior surface 32B of the fabric filter bag 32 to release therefrom and collect as separated matter SM in hoppers 36. After such cleaning, the one or more damper panels 102 are adjusted manually or mechanically. If adjusted mechanically, adjustment of the one or more damper panels 102 may be automated and affected by an electronic signal generated by a control device 56. Automated one or more damper panels 102 may be adjusted between two distinct positions, i.e., a relatively low gas velocity position to achieve a gas velocity of about 5 m/h to about 50 m/h, or about 10 m/h to about 40 m/h, used without fabric filter bag 32 dust cake formation DC and a relatively high gas velocity position to achieve a gas velocity of about 40 m/h to about 120 m/h, or about 50 m/h to about 130 m/h, used with fabric filter bag 32 dust cake formation DC. Alternatively, one or more automated damper panels 102 may be continuously or intermittently adjusted to any position ranging from a relatively low gas velocity position to achieve a gas velocity of about 5 m/h to about 50 m/h, or about 10 m/h to about 40 m/h, used without fabric filter bag 32 dust cake formation DC to a relatively high gas velocity position to achieve a gas velocity of about 40 m/h to about 120 m/h, or about 50 m/h to about 130 m/h, used with fabric filter bag 32 dust cake formation DC, and as the fabric filter bag 32 dust cake formation DC thickens. Such thickening of the fabric filter bag 32 dust cake formation DC may be measured, such as for example, by time, by a pressure drop and/or by a temperature drop. Based on such fabric filter bag 32 dust cake formation DC measurements, the one or more automated damper panels 102 are continuously or intermittently adjusted to any position ranging from a relatively low gas velocity position to achieve a gas velocity of about 5 m/h to about 50 m/h, or about 10 m/h to about 40 m/h, used without fabric filter bag 32 dust cake formation DC to a relatively high gas velocity position to achieve a gas velocity of about 40 m/h to about 120 m/h, or about 50 m/h to about 130 m/h, used with fabric filter bag 32 dust cake formation DC.

According to the subject fabric filter system 26, control device 56 affects cleaning of the fabric filter chambers 30 and affects positioning of the one or more damper panels 102. For a period of time from fabric filter chamber 30 cleaning until fabric filter bag 32 dust cake formation DC, the one or more damper panels 102 at inlets 104 and/or outlets 106 are positioned in a relatively closed position to achieve a relatively low polluted gas PG flow velocity of about 5 m/h to about 50 m/h, or about 10 m/h to about 40 m/h, through fabric filter chamber 30. With a relatively low polluted gas PG flow velocity, fabric filter bags 32 without exterior surface 32B dust cake formation DC are as effective in separating particulate matter PM from the polluted gas PG as fabric filter bags 32 with exterior surface 32B dust cake formation DC at a relatively high polluted gas PG flow velocity of about 40 m/h to about 120 m/h, or about 50 m/h to about 130 m/h. As dust cake formation DC builds or thickens on exterior surface 32B of fabric filter bags 32, the one or more damper panels 102 may be gradually repositioned to a relatively more opened position to increase the polluted gas PG flow velocity through fabric filter chamber 30. Alternatively, as dust cake formation DC builds or thickens on exterior surface 32B of fabric filter bags 32, the one or more damper panels 102 may be repositioned from a relatively closed position directly to a relatively more opened position to increase the polluted gas PG flow velocity through fabric filter chamber 30. Polluted gas PG flow velocity through fabric filter chamber 30 without dust cake formation DC on exterior surfaces 32B of fabric filter bags 32 is about 5 m/h to about 50 m/h, or about 10 m/h to about 40 m/h. Polluted gas PG flow velocity through fabric filter chamber 30 from dust cake formation DC on exterior surfaces 32B of fabric filter bags 32 up until pressure drop due to undesirably thick dust cake formation DC requiring fabric filter chamber 30 cleaning, is about40 m/h to about 120 m/h, or about 50 m/h to about 130 m/h. Furthermore, the one or more damper panels 102 may be positioned in a fully closed position such as for purposes of fabric filter chamber 30 cleaning or maintenance.

The subject method of using a relatively low particulate matter PM emission fabric filter system 26 comprises equipping the fabric filter system 26 with a gas flow damper system 100 comprising one or more movable damper panels 102 arranged at inlets 104 of each fabric filter chamber 30 and/or at outlets 106 of each fabric filter chamber 30 to control polluted gas PG flow velocity through each fabric filter chamber 30. According to the subject method, a fabric filter system 26 may include two to twenty or more fabric filter chambers 30. Each fabric filter chamber 30 may be equipped with ten to a hundred or more hanging fabric filter bags 32. Fabric filter systems 26 comprise multiple fabric filter chambers 30 so that as one or more fabric filter chamber(s) 30 undergo fabric filter bag 32 cleaning, maintenance, low demand turn down, and/or the like, the remaining fabric filter chamber(s) 30 may continue operation. According to the subject method, the method comprises equipping the fabric filter system 26 with a gas flow damper system 100 comprising one or more movable damper panels 102 arranged at inlets 104 of each fabric filter chamber 30 and/or at outlets 106 of each fabric filter chamber 30, adjustable to control polluted gas PG velocity through the fabric filter chamber 30 during a period of time from fabric filter bag 32 cleaning up until dust cake formation DC on surfaces 32B of the fabric filter bags 32 within the fabric filter chamber 30. The one or more movable damper panels 102 may be adjusted manually or mechanically by sliding, folding, swinging, or other such action. If adjusted mechanically, adjustment of the one or more damper panels 102 may be automated and affected by an electronic signal generated by a control device 56. In such case, the control device 56 determines the timing for removal of collected particulate matter PM/dust cake formation DC on the exterior surface 32B of the fabric filter bag 32. The control device 56 determines the timing for such removal of particulate matter PM/dust cake formation DC based on, for example, a certain length of time having elapsed since the last removal as measured by a timer 57, a certain pressure drop in polluted gas PG flow through the fabric filter chamber 30 as measured by one or more pressure sensors 58 arranged within the fabric filter chamber 30 upstream and/or downstream of the fabric filter bags 32, and/or a certain drop in temperature as measured by one or more temperature sensors 60 arranged within the fabric filter chamber 30 upstream and/or downstream of the fabric filter bags 32, as compared to predetermined values therefor. Predetermined values for length of time, pressure drop and/or temperature drop are programmed into or received into the control device 56, such as for example, via an interface 77. Upon passage of a length of time corresponding to the time predetermined value, the control device 56 electronically signals cleaning of one or more fabric filter chambers 30. Following cleaning of the one or more fabric filter chambers 30, and prior to operating the one or more cleaned fabric filter chambers 30, the control device 56 electronically affects adjustment of the one or more cleaned fabric filter chambers' 30 one or more damper panels 102 to affect a polluted gas PG velocity, to achieve a gas velocity of about 5 m/h to about 50 m/h, or about 10 m/h to about 40 m/h, through the one or more cleaned fabric filter chambers 30 effective for low particulate matter PM emission filtering of the polluted gas PG therein. Alternatively, or in addition, upon measuring a pressure drop deviating from the pressure predetermined value, the control device 56 electronically signals cleaning of one or more fabric filter chambers 30. Following cleaning of the one or more fabric filter chambers 30, and prior to operating the one or more cleaned fabric filter chambers 30, the control device 56 electronically affects adjustment of the one or more cleaned fabric filter chambers' 30 one or more damper panels 102 to affect a polluted gas PG velocity, to achieve a gas velocity of about 5 m/h to about 50 m/h, or about 10 m/h to about 40 m/h, through the one or more cleaned fabric filter chambers 30 effective for low particulate matter PM emission filtering of the polluted gas PG therein. Alternatively, or in addition, upon measuring a temperature drop deviating from the temperature predetermined value, the control device 56 electronically signals cleaning of one or more fabric filter chambers 30. Following cleaning of the one or more fabric filter chambers 30, and prior to operating the one or more cleaned fabric filter chambers 30, the control device 56 electronically affects adjustment of the one or more cleaned fabric filter chambers' 30 one or more damper panels 102 to affect a polluted gas PG velocity, to achieve a gas velocity of about 5 m/h to about 50 m/h, or about 10 m/h to about 40 m/h, through the one or more cleaned fabric filter chambers 30 effective for low particulate matter PM emission filtering of the polluted gas PG therein. The control device 56 electronically signals cleaning of the one or more fabric filter chambers 30 by electronically affecting operation of a pulse valve 52 resulting in a short pulse of pressurized gas G flowing through a nozzle pipe 48, through fluidly connected pulsing nozzles 50, and into the individual fabric filter bags 32 within the fabric filter chamber 30. As an effect of such a pulse of pressurized gas G, the fabric filter bags 32 expand rapidly, causing most, if not all, of the collected particulate matter PM or dust cake formation DC on the exterior surface 32B of the fabric filter bag 32 to release therefrom as separated matter SM collected in hopper 36. After such cleaning, if adjusted mechanically, adjustment of the one or more damper panels 102 may be automated and affected by an electronic signal generated by the control device 56. Automated one or more damper panels 102 may be adjusted between two distinct positions, i.e., a relatively low gas velocity position to achieve a gas velocity of about 5 m/h to about 50 m/h, or about 10 m/h to about 40 m/h used without fabric filter bag 32 dust cake formation DC, and a relatively high gas velocity position to achieve a gas velocity of about 40 m/h to about 120 m/h, or about 50 m/h to about 130 m/h used with fabric filter bag 32 dust cake formation DC. Alternatively, automated one or more damper panels 102 may be continuously or intermittently adjusted to any position ranging from a relatively low gas velocity position to achieve a gas velocity of about 5 m/h to about 50 m/h, or about 10 m/h to about 40 m/h used without fabric filter bag 32 dust cake formation DC, to a relatively high gas velocity position to achieve a gas velocity of about 40 m/h to about 120 m/h, or about 50 m/h to about 130 m/h used with fabric filter bag 32 dust cake formation DC, and as the fabric filter bag 32 dust cake formation DC thickens. Such thickening of the fabric filter bag 32 dust cake formation DC may be measured, such as for example, by time, by a pressure drop and/or by a temperature drop. Based on such fabric filter bag 32 dust cake formation DC measurements, the automated one or more damper panels 102 are continuously or intermittently adjusted to any position ranging from a relatively low gas velocity position for a gas velocity of about 5 m/h to about 50 m/h, or about 10 m/h to about 40 m/h used without fabric filter bag 32 dust cake formation DC, to a relatively high gas velocity position for a gas velocity of about 40 m/h to about 120 m/h, or about 50 m/h to about 130 m/h used with fabric filter bag 32 dust cake formation DC.

According to the subject method of using fabric filter system 26 equipped with a gas flow damper system 100, control device 56 affects cleaning of the fabric filter chambers 30 and affects positioning of the one or more damper panels 102. For a period of time from fabric filter chamber 30 cleaning until fabric filter bag 32 dust cake formation DC, the one or more damper panels 102 at inlets 104 and/or outlets 106 are positioned in a relatively closed position to achieve a relatively low polluted gas PG flow velocity of about 5 m/h to about 50 m/h, or about 10 m/h to about 40 m/h through fabric filter chamber 30. With a relatively low polluted gas PG flow velocity, fabric filter bags 32 without exterior surface 32B dust cake formation DC are as effective in separating particulate matter PM from the polluted gas PG as fabric filter bags 32 with exterior surface 32B dust cake formation DC at a relatively high polluted gas PG flow velocity of about 40 m/h to about 120 m/h, or about 50 m/h to about 130 m/h. As dust cake formation DC builds or thickens on exterior surface 32B of fabric filter bags 32, the one or more damper panels 102 may be gradually repositioned to a relatively more opened position to increase the polluted gas PG flow velocity through fabric filter chamber 30. Alternatively, as dust cake formation DC builds or thickens on exterior surface 32B of fabric filter bags 32, the one or more damper panels 102 may be repositioned from a relatively closed position directly to a relatively more opened position to increase the polluted gas PG flow velocity through fabric filter chamber 30. Polluted gas PG flow velocity through fabric filter chamber 30 without dust cake formation DC on exterior surfaces 32B of fabric filter bags 32 is about 5 m/h to about 50 m/h, or about 10 m/h to about 40 m/h. Polluted gas PG flow velocity through fabric filter chamber 30 up until pressure drop due to undesirably thick dust cake formation DC requiring fabric filter chamber 30 cleaning, is about40 m/h to about 120 m/h, or about 50 m/h to about 130 m/h. Furthermore, the one or more damper panels 102 may be positioned in a fully closed position such as for purposes of fabric filter chamber 30 cleaning or maintenance.

In summary, a plant 10 is provided comprising a fabric filter system 26 comprising one or more fabric filter chambers 30 with each fabric filter chamber 30 comprising a plurality of fabric filter bags 32, an inlet 104 equipped with one or more movable damper panels 102 and/or an outlet 106 equipped with one or more movable damper panels 102, and a control device 56 operative to affect positioning of the one or more damper panels 102 based at least in part on one or more fabric filter bag 32 dust cake formation DC measurements. As such, the one or more fabric filter bag 32 dust cake formation DC measurements are measured by a timer 57, one or more pressure sensors 58 or one or more temperature sensors 60. The one or more fabric filter bag 32 dust cake formation DC measurements are so measured by one or more sensors 58, 60 arranged within the one or more fabric filter chambers 30 upstream and/or downstream, with respect to the general flow of polluted gas PG through the plurality of fabric filter bags 32 arranged within the fabric filter system 26. The control device 56 of the fabric filter system 26 affects positioning of the one or more damper panels 102 for control of polluted gas PG velocity flowing through the one or more fabric filter chambers 30 from the inlet 104 to the outlet 106. As such, the one or more damper panels 102 are positioned in a relatively closed position for a polluted gas PG velocity of about 5 m/h to about 50 m/h, or about 10 m/h to about 40 m/h flowing through the one or more fabric filter chambers 30 for a period of time from cleaning of the plurality of fabric filter bags 32 until dust cake formation DC on exterior surfaces 32B of the plurality of fabric filter bags 32. Further, the one or more damper panels 102 are positioned in a relatively open position for a polluted gas PG velocity of about 40 m/h to about 120 m/h, or about 50 m/h to about 130 m/h flowing through the one or more fabric filter chambers 30 for a period of time from dust cake formation DC on exterior surfaces 32B of the plurality of fabric filter bags 32 until cleaning of the plurality of fabric filter bags 32. The one or more damper panels 102 are positioned in a closed position for a polluted gas PG velocity of about zero flowing through the one or more fabric filter chambers 30 during cleaning of the plurality of fabric filter bags 32.

In summary, a method is provided for using a plant 10 fabric filter system 26 for cleaning a polluted gas PG to achieve relatively low particulate matter PM emissions in a produced cleaned gas CG. The method comprises equipping a fabric filter system 26 comprising one or more fabric filter chambers 30, with each fabric filter chamber 30 comprising a plurality of fabric filter bags 32, an inlet 104, and an outlet 106, with one or more movable damper panels 102 at the inlet 104 and/or outlet 106, and controlling using a control device 56 positioning of the one or more damper panels 102 based at least in part on one or more fabric filter bag 32 dust cake formation DC measurements. According to such method, the one or more fabric filter bag 32 dust cake formation DC measurements are measured by a timer 57, one or more pressure sensors 58 or one or more temperature sensors 60. The one or more fabric filter bag 32 dust cake formation DC measurements are measured by one or more sensors 58, 60 arranged within the one or more fabric filter chambers 30 upstream and/or downstream, with respect to the general flow of polluted gas PG through the plurality of fabric filter bags 32 arranged within the fabric filter system 26. The control device 56 of the fabric filter system 26 affects positioning of the one or more damper panels 102 for control of polluted gas PG velocity flowing through the one or more fabric filter chambers 30 from the inlet 104 to the outlet 106. As such, the one or more damper panels 102 are positioned in a relatively closed position for a polluted gas PG velocity of about 5 m/h to about 50 m/h, or about 10 m/h to about 40 m/h flowing through the one or more fabric filter chambers 30 for a period of time from cleaning of the plurality of fabric filter bags 32 until dust cake formation DC on exterior surfaces 32B of the plurality of fabric filter bags 32, and positioned in a closed position for a polluted gas PG velocity of about zero flowing through the one or more fabric filter chambers 30 during cleaning of the plurality of fabric filter bags 32. Further, the one or more damper panels 102 are positioned in a relatively open position for a polluted gas PG velocity of about 40 m/h to about 120 m/h, or about 50 m/h to about 130 m/h flowing through the one or more fabric filter chambers 30 for a period of time from dust cake formation DC on exterior surfaces 32B of the plurality of fabric filter bags 32 until cleaning of the plurality of fabric filter bags 32.

## Claims

1. A plant (10) comprising:
a fabric filter system (26) comprising one or more fabric filter chambers (30) with each fabric filter chamber (30) comprising a plurality of fabric filter bags (32), an inlet (104) equipped with one or more movable damper panels (102) or an outlet (106) equipped with one or more movable damper panels (102), and a control device (56) operative to affect positioning of the one or more damper panels (102) based at least in part on one or more fabric filter bag (32) dust cake formation measurements the panel (102) arranged at an inlet of each fabric filter chamber and/or at an outlet of each fabric filter chamber is adjustable to control gas velocity through the fabric filter chamber during a period of time from filter bag cleaning up until dust cake formation on surfaces of the filter bags within the fabric filter chamber.

2. The plant (10) of claim 1, wherein the one or more fabric filter bag (32) dust cake formation measurements are measured by a timer (57), one or more pressure sensors (58) or one or more temperature sensors (60).

3. The plant (10) of claim 1 or 2, wherein the one or more fabric filter bag (32) dust cake formation measurements are measured by one or more sensors (58, 60) arranged within the one or more fabric filter chambers (30).

4. The plant (10) of any one of claims 1 to 3, wherein the one or more fabric filter bag (32) dust cake formation measurements are measured by one or more sensors (58, 60) arranged within the one or more fabric filter chambers (30) upstream or downstream of the plurality of fabric filter bags (32).

5. The plant (10) of any one of claims 1 to 4, wherein the control device (56) affects positioning of the one or more damper panels (102) for control of polluted gas velocity flowing through the one or more fabric filter chambers (30) from the inlet (104) to the outlet (106).

6. The plant (10) of any one of claims 1 to 5, wherein the one or more damper panels (102) are positioned in a relatively closed position for a polluted gas velocity of 5 m/h to 50 m/h, or 10 m/h to 40 m/h flowing through the one or more fabric filter chambers (30) for a period of time from cleaning of the plurality of fabric filter bags (32) until dust cake formation on exterior surfaces (32B) of the plurality of fabric filter bags (32).

7. The plant (10) of any one of claims 1 to 6, wherein the one or more damper panels (102) are positioned in a relatively open position for a polluted gas velocity of 40 m/h to 120 m/h, or 50 m/h to 130 m/h flowing through the one or more fabric filter chambers (30) for a period of time from dust cake formation an exterior surfaces (32B) of the plurality of fabric filter bags (32) until cleaning of the plurality of fabric filter bags (32).

8. The plant (10) of any one of claims 1 to 7, wherein the one or more damper panels (102) are positioned in a closed position for a polluted gas velocity of about zero flowing through the one or more fabric filter chambers (30) during cleaning of the plurality of fabric filter bags (32).

9. A method comprising:
equipping a fabric filter system (26) comprising one or more fabric filter chambers (30), with each fabric filter chamber (30) comprising a plurality of fabric filter bags (32), an inlet (104), and an outlet (106), with one or more movable damper panels (102);
controlling using a control device (56) positioning of the one or more damper panels (102) based at least in part an one or more fabric filter bag (32) dust cake formation measurements;
adjusting the panel (102) arranged at an inlet of each fabric filter chamber and/or at an outlet of each fabric filter chamber to control gas velocity through the fabric filter chamber during a period of time from filter bag cleaning up until dust cake formation on surfaces of the filter bags within the fabric filter chamber.

10. The method of claim 9, wherein the one or more fabric filter bag (32) dust cake formation measurements are measured by a timer (57), one or more pressure sensors (58) or one or more temperature sensors (60).

11. The method of claim 9 or 10, wherein the one or more fabric filter bag (32) dust cake formation measurements are measured by one or more sensors (58, 60) arranged within the one or more fabric filter chambers (30).

12. The method of any one of claims 9 to 11, wherein the one or more fabric filter bag (32) dust cake formation measurements are measured by one or more sensors (58, 60) arranged within the one or more fabric filter chambers (30) upstream or downstream of the plurality of fabric filter bags (32).

13. The method of any one of claims 9 to 12, wherein the control device (56) affects positioning of the one or more damper panels (102) for control of polluted gas velocity flowing through the one or more fabric filter chambers (30) from the inlet (104) to the outlet (106).

14. The method of any one of claims 9 to 13, wherein the one or more damper panels (102) are positioned in a relatively closed position for a polluted gas velocity of 5 m/h to 50 m/h, or 10 m/h to 40 m/h flowing through the one or more fabric filter chambers (30) for a period of time from cleaning of the plurality of fabric filter bags (32) until dust cake formation on exterior surfaces (32B) of the plurality of fabric filter bags (32), and positioned in a closed position for a polluted gas velocity of about zero flowing through the one or more fabric filter chambers (30) during cleaning of the plurality of fabric filter bags (32).

15. The method of any one of claims 9 to 14, wherein the one or more damper panels (102) are positioned in a relatively open position for a polluted gas velocity of 40 m/h to 120 m/h, or 50 m/h to 130 m/h flowing through the one or more fabric filter chambers (30) for a period of time from dust cake formation on exterior surfaces (32B) of the plurality of fabric filter bags (32) until cleaning of the plurality of fabric filter bags (32).

## Patentansprüche

1. Anlage (10) umfassend: ein Gewebefiltersystem (26) umfassend ein oder mehrere Gewebefilterkammern (30), wobei jede Gewebefilterkammer (30) eine Vielzahl von Gewebefilterbeuteln (32), einen Einlass (104), ausgestattet mit einer oder mehreren beweglichen Dämpferplatten (102), oder einen Auslass (106), ausgestattet mit einer oder mehreren beweglichen Dämpferplatten (102), und eine Steuervorrichtung (56), welche wirksam die Positionierung der einen oder mehreren Dämpferplatten (102), basierend mindestens teilweise auf den Messungen der Staubkuchenbildung des einen oder der mehreren Gewebefilterbeutel (32), beeinflusst, wobei die Platte (102), angeordnet an einem Einlass von jeder Gewebefilterkammer und/oder an einem Auslass von jeder Gewebefilterkammer, einstellbar ist, um die Gasgeschwindigkeit durch die Gewebefilterkammer während einer Zeitspanne von der Reinigung der Filterbeutel bis zur Staubkuchenbildung auf Oberflächen der Filterbeutel innerhalb der Gewebefilterkammer zu steuern.

2. Anlage (10) nach Anspruch 1, wobei die Messungen der Staubkuchenbildung des einen oder der mehreren Gewebefilterbeutel (32) von einem Zeitmesser (57), einem oder mehreren Drucksensoren (58) oder einem oder mehreren Temperatursensoren (60) gemessen werden.

3. Anlage (10) nach Anspruch 1 oder 2, wobei die Messungen der Staubkuchenbildung des einen oder der mehreren Gewebefilterbeutel (32) von einem oder mehreren Sensoren (58, 60), welche innerhalb der einen oder mehreren Gewebefilterkammern (30) angeordnet sind, gemessen werden.

4. Anlage (10) nach einem der Ansprüche 1 bis 3, wobei die Messungen der Staubkuchenbildung des einen oder der mehreren Gewebefilterbeutel (32) von einem oder mehreren Sensoren (58, 60), welche innerhalb der einen oder mehreren Gewebefilterkammern (30) vorgelagert oder nachgelagert von der Vielzahl von Gewebefilterbeuteln (32) angeordnet sind, gemessen werden.

5. Anlage (10) nach einem der Ansprüche 1 bis 4, wobei die Steuervorrichtung (56) die Positionierung der einen oder mehreren Dämpferplatten (102) zur Steuerung der Geschwindigkeit von verunreinigtem Gas, das durch die eine oder mehreren Gewebefilterkammern (30) von dem Einlass (104) bis zum Auslass (106) strömt, beeinflusst.

6. Anlage (10) nach einem der Ansprüche 1 bis 5, wobei die eine oder mehreren Dämpferplatten (102) in einer relativ geschlossenen Position für eine Geschwindigkeit von verunreinigtem Gas von 5 m/h bis 50 m/h oder 10 m/h bis 40 m/h angeordnet sind, das durch die eine oder mehreren Gewebefilterkammern (30) für eine Zeitspanne von der Reinigung der Vielzahl von Gewebefilterbeuteln (32) bis zur Staubkuchenbildung auf äußeren Oberflächen (32B) der Vielzahl von Gewebefilterbeuteln (32) strömt.

7. Anlage (10) nach einem der Ansprüche 1 bis 6, wobei die eine oder mehreren Dämpferplatten (102) in einer relativ offenen Position für eine Geschwindigkeit von verunreinigtem Gas von 40 m/h bis 120 m/h oder 50 m/h bis 130 m/h angeordnet sind, das durch die eine oder mehreren Gewebefilterkammern (30) für eine Zeitspanne von der Staubkuchenbildung auf äußeren Oberflächen (32B) der Vielzahl von Gewebefilterbeuteln (32) bis zur Reinigung der Vielzahl von Gewebefilterbeuteln (32) strömt.

8. Anlage (10) nach einem der Ansprüche 1 bis 7, wobei die eine oder mehreren Dämpferplatten (102) in einer geschlossenen Position für eine Geschwindigkeit von verunreinigtem Gas von etwa Null angeordnet sind, das durch die eine oder mehreren Gewebefilterkammern (30) während der Reinigung der Vielzahl von Gewebefilterbeuteln (32) strömt.

9. Verfahren, umfassend:
Ausstatten eines Gewebefiltersystems (26) umfassend eine oder mehrere Gewebefilterkammern (30), wobei jede Gewebefilterkammer (30) eine Vielzahl von Gewebefilterbeuteln (32), einen Einlass (104) und einen Auslass (106), mit einer oder mehreren beweglichen Dämpferplatten (102) umfasst;
Steuern der Positionierung der einen oder mehreren Dämpferplatten (102) basierend mindestens teilweise auf den Messungen der Staubkuchenbildung des einen oder der mehreren Gewebefilterbeutel (32) unter Verwendung einer Steuervorrichtung (56);
Einstellen der Platte (102), angeordnet an einem Einlass von jeder Gewebefilterkammer und/oder an einem Auslass von jeder Gewebefilterkammer zur Steuerung der Gasgeschwindigkeit durch die Gewebefilterkammer während einer Zeitspanne von der Reinigung der Filterbeutel bis zur Staubkuchenbildung auf Oberflächen der Filterbeutel innerhalb der Gewebefilterkammer.

10. Verfahren nach Anspruch 9, wobei die Messungen der Staubkuchenbildung des einen oder der mehreren Gewebefilterbeutel (32) von einem Zeitmesser (57), einem oder mehreren Drucksensoren (58) oder einem oder mehreren Temperatursensoren (60) gemessen werden.

11. Verfahren nach Anspruch 9 oder 10, wobei die Messungen der Staubkuchenbildung des einen oder der mehreren Gewebefilterbeutel (32) von einem oder mehreren Sensoren (58, 60), welche innerhalb der einen oder mehreren Gewebefilterkammern (30) angeordnet sind, gemessen werden.

12. Verfahren nach einem der Ansprüche 9 bis 11, wobei die Messungen der Staubkuchenbildung des einen oder der mehreren Gewebefilterbeutel (32) von einem oder mehreren Sensoren (58, 60), welche innerhalb der einen oder mehreren Gewebefilterkammern (30) vorgelagert oder nachgelagert von der Vielzahl von Gewebefilterbeutel (32) angeordnet sind, gemessen werden.

13. Verfahren nach einem der Ansprüche 9 bis 12, wobei die Steuervorrichtung (56) die Positionierung der einen oder mehreren Dämpferplatten (102) zur Steuerung der Geschwindigkeit von verunreinigtem Gas, das durch die eine oder mehreren Gewebefilterkammern (30) von dem Einlass (104) bis zum Auslass (106) strömt, beeinflusst.

14. Verfahren nach einem der Ansprüche 9 bis 13, wobei die eine oder mehreren Dämpferplatten (102) in einer relativ geschlossenen Position für eine Geschwindigkeit von verunreinigtem Gas von 5 m/h bis 50 m/h oder 10 m/h bis 40 m/h angeordnet sind, das durch die eine oder mehreren Gewebefilterkammern (30) für eine Zeitspanne von der Reinigung der Vielzahl von Gewebefilterbeuteln (32) bis zur Staubkuchenbildung auf äußeren Oberflächen (32B) der Vielzahl von Gewebefilterbeuteln (32) strömt, und in einer relativ geschlossenen Position für eine Geschwindigkeit von verunreinigtem Gas von etwa Null angeordnet sind, das durch die eine oder mehreren Gewebefilterkammern (30) während der Reinigung der Vielzahl von Gewebefilterbeuteln (32) strömt.

15. Verfahren nach einem der Ansprüche 9 bis 14, wobei die eine oder mehreren Dämpferplatten (102) in einer relativ offenen Position für eine Geschwindigkeit von verunreinigtem Gas von 40 m/h bis 120 m/h oder 50 m/h bis 130 m/h angeordnet sind, das durch die eine oder mehreren Gewebefilterkammern (30) für eine Zeitspanne von der Staubkuchenbildung auf äußeren Oberflächen (32B) der Vielzahl von Gewebefilterbeuteln (32) bis zur Reinigung der Vielzahl von Gewebefilterbeuteln (32) strömt.

## Revendications

1. Installation (10) comprenant : un système de filtre en tissu (26) comprenant une ou plusieurs chambres de filtration en tissu (30) avec chaque chambre de filtration en tissu (30) comprenant une pluralité de sacs filtrants en tissu (32), une entrée (104) équipée d'un ou plusieurs panneaux amortisseurs amovibles (102) ou une sortie (106) équipée d'un ou plusieurs panneaux amortisseurs amovibles (102), et un dispositif de contrôle (56) opérationnel pour affecter le positionnement des un ou plusieurs panneaux amortisseurs amovibles (102) en fonction au moins en partie d'une ou plusieurs mesures de formation de gâteau de poussière de sac filtrant en tissu (32) le panneau (102) agencé au niveau d'une entrée de chaque chambre de filtration en tissu et/ou au niveau d'une sortie de chaque chambre de filtration en tissu est réglable pour contrôler une vitesse de gaz à travers la chambre de filtration en tissu pendant un laps de temps du nettoyage du sac filtrant jusqu'à la formation de gâteau de poussière sur des surfaces des sacs filtrants à l'intérieur de la chambre de filtration en tissu.

2. Installation (10) selon la revendication 1, dans laquelle les une ou plusieurs mesures de formation de gâteau de poussière de sac filtrant en tissu (32) sont mesurées par une minuterie (57), un ou plusieurs capteurs de pression (58) ou un ou plusieurs capteurs de température (60).

3. Installation (10) selon la revendication 1 ou 2, dans laquelle les une ou plusieurs mesures de formation de gâteau de poussière de sac filtrant en tissu (32) sont mesurées par un ou plusieurs capteurs (58, 60) agencés à l'intérieur des une ou plusieurs chambres de filtration en tissu (30).

4. Installation (10) selon l'une quelconque des revendications 1 à 3, dans laquelle les une ou plusieurs mesures de formation de gâteau de poussière de sac filtrant en tissu (32) sont mesurées par un ou plusieurs capteurs (58, 60) agencés à l'intérieur des une ou plusieurs chambres de filtration en tissu (30) en amont ou en aval de la pluralité de sacs filtrants en tissu (32).

5. Installation (10) selon l'une quelconque des revendications 1 à 4, dans laquelle le dispositif de contrôle (56) affecte le positionnement des un ou plusieurs panneaux amortisseurs (102) pour contrôler une vitesse de gaz pollué s'écoulant à travers les une ou plusieurs chambres de filtration en tissu (30) de l'entrée (104) à la sortie (106).

6. Installation (10) selon l'une quelconque des revendications 1 à 5, dans laquelle les un ou plusieurs panneaux amortisseurs (102) sont positionnés dans une position relativement fermée pour une vitesse de gaz pollué de 5 m/h à 50 m/h, ou 10 m/h à 40 m/h s'écoulant à travers les une ou plusieurs chambres de filtration en tissu (30) pendant un laps de temps depuis le nettoyage de la pluralité de sacs filtrants en tissu (32) jusqu'à la formation de gâteau de poussière sur des surfaces extérieures (32B) de la pluralité de sacs filtrants en tissu (32).

7. Installation (10) selon l'une quelconque des revendications 1 à 6, dans laquelle les un ou plusieurs panneaux amortisseurs (102) sont positionnés dans une position relativement ouverte pour une vitesse de gaz pollué de 40 m/h à 120 m/h, ou de 50 m/h à 130 m/h s'écoulant à travers les une ou plusieurs chambres de filtration en tissu (30) pendant un laps de temps depuis la formation de gâteau de poussière sur des surfaces extérieures (32B) de la pluralité de sacs filtrants en tissu (32) jusqu'au nettoyage de la pluralité de sacs filtrants en tissu (32).

8. Installation (10) selon l'une quelconque des revendications 1 à 7, dans laquelle les un ou plusieurs panneaux amortisseurs (102) sont positionnés dans une position fermée pour une vitesse de gaz pollué d'environ zéro s'écoulant à travers les une ou plusieurs chambres de filtration en tissu (30) pendant le nettoyage de la pluralité de sacs filtrants en tissu (32).

9. Procédé comprenant :
l'équipement d'un système de filtre de tissu (26) comprenant une ou plusieurs chambres de filtration en tissu (30), avec chaque chambre de filtration en tissu (30) comprenant une pluralité de sacs filtrants en tissu (32), une entrée (104), et une sortie (106), avec un ou plusieurs panneaux amortisseurs amovibles (102) ;
le contrôle à l'aide d'un dispositif de contrôle (56) positionnement des un ou plusieurs panneaux amortisseurs (102) en fonction au moins en partie d'une ou plusieurs mesures de formation de gâteau de poussière de sac filtrant en tissu (32) ;
l'ajustement du panneau (102) agencé au niveau d'une entrée de chaque chambre de filtration en tissu et/ou au niveau d'une sortie de chaque chambre de filtration en tissu pour contrôler une vitesse de gaz à travers la chambre de filtration en tissu pendant un laps de temps depuis le nettoyage du sac filtrant jusqu'à la formation de gâteau de poussière sur des surfaces des sacs filtrants à l'intérieur de la chambre de filtration en tissu.

10. Procédé selon la revendication 9, dans lequel les une ou plusieurs mesures de formation de gâteau de poussière de sac filtrant en tissu (32) sont mesurées par une minuterie (57), un ou plusieurs capteurs de pression (58) ou un ou plusieurs capteurs de température (60).

11. Procédé selon la revendication 9 ou 10, dans lequel les une ou plusieurs mesures de formation de gâteau de poussière de sac filtrant en tissu (32) sont mesurées par un ou plusieurs capteurs (58, 60) agencés à l'intérieur des une ou plusieurs chambres de filtration en tissu (30).

12. Procédé selon l'une quelconque des revendications 9 à 11, dans lequel les une ou plusieurs mesures de formation de gâteau de poussière de sac filtrant en tissu (32) sont mesurées par un ou plusieurs capteurs (58, 60) agencés à l'intérieur des une ou plusieurs chambres de filtration en tissu (30) en amont ou en aval de la pluralité de sacs filtrants en tissu (32).

13. Procédé selon l'une quelconque des revendications 9 à 12, dans lequel le dispositif de contrôle (56) affecte le positionnement des un ou plusieurs panneaux amortisseurs (102) pour contrôler une vitesse de gaz pollué s'écoulant à travers les une ou plusieurs chambres de filtration en tissu (30) de l'entrée (104) à la sortie (106).

14. Procédé selon l'une quelconque des revendications 9 à 13, dans lequel les un ou plusieurs panneaux amortisseurs (102) sont positionnés dans une position relativement fermée pour une vitesse de gaz pollué de 5 m/h à 50 m/h, ou de 10 m/h à 40 m/h s'écoulant à travers les une ou plusieurs chambres de filtration en tissu (30) pendant un laps de temps depuis le nettoyage de la pluralité de sacs filtrants en tissu (32) jusqu'à la formation de gâteau de poussière sur des surfaces extérieures (32B) de la pluralité de sacs filtrants en tissu (32), et positionnés dans une position fermée pour une vitesse de gaz pollué d'environ zéro s'écoulant à travers les une ou plusieurs chambres de filtration en tissu (30) pendant le nettoyage de la pluralité de sacs filtrants en tissu (32).

15. Procédé selon l'une quelconque des revendications 9 à 14, dans lequel les un ou plusieurs panneaux amortisseurs (102) sont positionnés dans une position relativement ouverte pour une vitesse de gaz pollué de 40 m/h à 120 m/h, ou de 50 m/h à 130 m/h s'écoulant à travers les une ou plusieurs chambres de filtration en tissu (30) pendant un laps de temps depuis la formation de gâteau de poussière sur des surfaces extérieures (32B) de la pluralité de sacs filtrants en tissu (32) jusqu'au nettoyage de la pluralité de sacs filtrants en tissu (32).
